# EUROPEAN PATENT APPLICATION

(11) **EP 1 338 984 A2**
(43) Date of publication of application: **27.08.2003**
(21) Application number: 03250436.7
(22) Date of filing: 23.01.2003
(51) Int. Cl.: G06F 17/30

(54) **Method and device for retrieving point of interest**

(30) Priority: 19.02.2002 JP 2002041887
(71) Applicant: Alpine Electronics, Inc., Tokyo (JP)
(72) Inventor: Nakamura, Hikaru, Alpine Electronics, Inc., Iwaki-City, Fukushima (JP); Mizukami, Kyouichi, Alpine Electronics, Inc., Iwaki-City, Fukushima (JP)
(74) Representative: Kensett, John Hinton

(57) **Abstract**

A method and device for retrieving a point of interest (POI) in which a plurality of POI data bases provided according to countries are recorded on a DVD-ROM (1) by correlating them with respective country codes for international calls. A POI data base of a country having a country code corresponding to the first two or three digits of a number input by a user is used as a data base to be searched, and, using a sequence of digits other than the first two or three digits as a retrieval key, the corresponding POI is retrieved from the data base that is searched. The method and device make it possible to retrieve a desired POI by a telephone number or other sequence of numbers from the POI data bases of the plurality of countries and their operations are easily to carry out.

## Description

### BACKGROUND OF THE INVENTION

### 1. Field of the Invention

The present invention relates to a method for retrieving a desired point of interest (POI) by a telephone number or other digit sequences from POI data bases of a plurality of countries, and, more particularly, to a method and a device for retrieving a POI which are suitable for POI retrieval of a vehicle navigation system.

### 2. Description of the Related Art

A vehicle navigation system comprises a GPS receiver for receiving electric waves sent from a GPS (global positioning system) satellite, map data bases, a moving distance sensor for detecting the moving distance of a vehicle, and a gyroscope for detecting the orientation of the vehicle. The current position of the vehicle is detected using the GPS receiver, the map data bases, the moving distance sensor, and the gyroscope.

The vehicle navigation system has a route guide function for providing guide information to a user to allow him to move the vehicle along a best route (guide route) from the current position of the vehicle to a destination as a result of searching for the best route when the user has set the destination. In the case where this guide route function is used, when, for example, the vehicle approaches an intersection, the intersection with an arrow indicating the direction of movement of the vehicle is displayed on a display device or a the direction of movement is indicated to the user by a voice, so that the vehicle is safely and quickly guided to the destination.

In the vehicle navigation system, CD-ROM, DVD (digital versatile disk)-ROM, or a hard disk is used as a storage medium for storing map data bases. In recent years, to meet the demand for more capable vehicle navigation systems, not only map data bases, but also POI data bases comprising, for example, names, positions (latitudes/longitudes), addresses, and telephone numbers according to different types of POIs, such as gasoline stations and department stores, public facilities, and tourist facilities, are recorded on any one of such storage media. In this type of vehicle navigation system, for example, it is possible to retrieve a desired POI using a telephone number in order to display a map of the area surrounding the retrieved POI or set the retrieved POI as a destination by a simple operation.

In European vehicle navigation systems, map data bases of a plurality of countries and a plurality of POI data bases constructed according to countries are stored on a storage medium so that they can be used for navigation to a plurality of countries. In this type of vehicle navigation system, when a POI is retrieved using a telephone number, the user, first, calls up a menu screen to select "telephone number search" from the menu screen. Then, the user specifies a desired country on the displayed screen and inputs the telephone number.

However, as mentioned above, in the related method for retrieving a POI using a telephone number, POI retrieval cannot be executed unless the desired country is selected, so that the operation is complicated.

Japanese Unexamined Patent Application Publication No. 10-153950 proposes a device for retrieving a POI corresponding to input digits (telephone number or a number registered by a user) after the user has switched an ordinary operation mode to a number input mode by pressing a numerical keypad. However, when this device is applied to a vehicle navigation system including POI data bases constructed according to countries, the user needs to switch to a POI data base which becomes the data base to be searched.

### SUMMARY OF THE INVENTION

Accordingly, it is an object of the present invention to provide a method and a device for retrieving a point of interest (POI) which make it possible to retrieve a desired POI using a telephone number or other digit sequences from POI data bases of a plurality of countries, and whose operations are simple.

To this end, according to one aspect of the present invention, there is provided a method for retrieving a point of interest (POI). More specifically, this method is used to retrieve a desired POI from a plurality of POI data bases provided according to countries. The plurality of POI data bases provided according to countries are correlated with respective country codes for international calls. In accordance with an input number, the POI data base to be searched is determined from among the plurality of POI data bases, and a sequence of digits following a digit used to determine the POI data base to be searched is used as a retrieval key to retrieve the desired POI from the data base that is searched.

According to another aspect of the present invention, there is provided a device for retrieving a point of interest (POI). More specifically, this device is used to retrieve a desired POI from a plurality of POI data bases provided according to countries, and comprises means for storing the plurality of POI data bases provided according to countries by correlating them with respective country codes for international calls, means for inputting a number by a user, and controlling means for determining the POI data base to be searched from among the POI data bases in accordance with the number input through the inputting means in order to retrieve the desired POI from the data base that is searched using as a retrieval key a sequence of digits following a digit used to determine the POI data base to be searched.

The inventor et al. of the application have focused attention on adding a country code in front of the telephone number when making an international call. In other words, when POI data bases constructed according to countries can be switched by a country code, a desired POI can be retrieved by a simple operation from the plurality of POI data bases of respective countries. Hereunder, this will be explained in more detail.

The country codes of most countries, excluding the United States and Canada, are two or three digits. In addition, there are no country codes that begin with 0. Therefore, if "0" is input first, a determination is made that the phone call is not an international call, so that the POI data base of one's own country (or an initially set country) is set as the data base to be searched. A sequence of digits that are subsequently input is used as a retrieval key to retrieve the desired POI corresponding to the retrieval key from the POI data base that is searched.

If a digit other than "0" has been input first, an input operation up to the second or third digit is waited for to determine whether or not the POI data base of the corresponding country code is provided. If the POI data base of the country code corresponding to the input digits is provided, the POI data base corresponding to the country code is set as the POI data base to be searched. A sequence of digits that are subsequently input is used as a retrieval key to retrieve a desired POI from the POI data base that is searched.

By this, it is not necessary to call out a menu screen for specifying the country to be searched, so that the desired POI can be retrieved from the plurality of POI data bases provided according to countries by a simple operation.

The vehicle navigation system often has a function for allowing a user to register the position (or positional point) of a desired POI. If a POI corresponding to a digit sequence input by the user is not provided in the POI data bases previously provided according to countries, the user may check whether or not the POI corresponding to the digit sequence input by the user is provided in a POI data base registered by the user.

An embodiment of the present invention will now be described, by way of example, with reference to the accompanying diagrammatic drawings, in which:
Fig. 1 is a block diagram of the structure of a vehicle navigation system for carrying out a method for retrieving a POI by a telephone number in accordance with the present invention;
Fig. 2 is a schematic view showing map data bases of a plurality of countries and POI data bases provided according to countries, which are recorded on a DVD;
Fig. 3 is a schematic view showing the structure of a POI data base;
Fig. 4 is a schematic view showing the structure of a POI data base registered by a user;
Fig. 5 shows examples of countries having two digit country codes for international calls;
Fig. 6 shows examples of countries having three digit country codes for international calls;
Fig. 7 is a first flow chart of steps carried out in the method for retrieving a POI by a telephone number in an embodiment of the present invention;
Fig. 8 is a second flow chart of steps carried out in the method for retrieving a POI by a telephone number in the embodiment of the present invention;
Fig. 9 is a third flow chart of steps carried out in the method for retrieving a POI by a telephone number in the embodiment of the present invention;
Fig. 10 is a fourth flow chart of steps carried out in the method for retrieving a POI by a telephone number in the embodiment of the present invention;
Fig. 11 is a fifth flow chart of steps carried out in the method for retrieving a POI by a telephone number in the embodiment of the present invention;
Fig. 12 shows an example of a display screen in a number input mode;
Fig. 13 shows an example of a POI information display that is produced after retrieving a POI; and
Fig. 14 shows an example of a screen display when a POI corresponding to an input number is not provided in a data base.

### DESCRIPTION OF THE PREFERRED EMBODIMENTS

Hereunder, a description of embodiments of the present invention will be given with reference to the attached drawings.

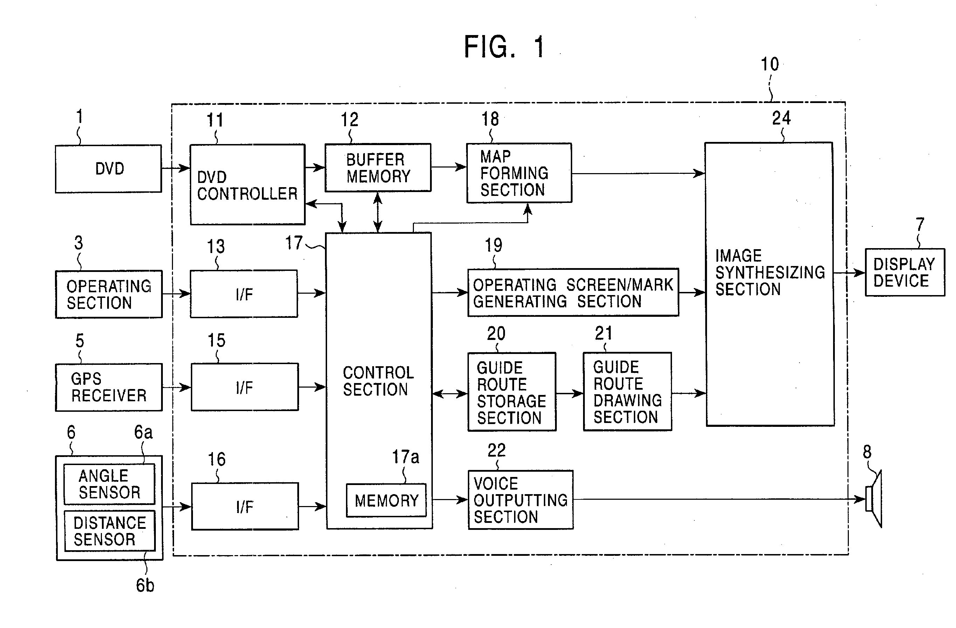

Fig. 1 is a block diagram of the structure of a vehicle navigation system for carrying out a method for retrieving a POI by a telephone number in accordance with the present invention.

Reference numeral 1 denotes a storage medium for storing map data bases of a plurality of countries and POI data bases constructed according to countries. Although, in an embodiment, a DVD (DVD-ROM) is used as a storage medium for recording the map data bases, a hard disk or any other storage medium may be used. The map data bases are divided with latitudinal widths and longitudinal widths of suitable sizes according to a reduction scale of, for example, 1/12500, 1/25000, 1/50000, or 1/100000. Roads, etc., are stored as a coordinate collection of nodes that indicate latitudes and longitudes. The roads are represented by connection of two or more nodes, and the portion that connect two nodes is called a link.

Reference numeral 3 denotes an operating section comprising a numerical keypad and other operation keys for operating a navigation system body 10 (described later). The operating section 3 may comprise a touch panel or a remote controller. The touch panel is mounted to a screen of a display device 7 (described later), and outputs a signal in accordance with a location touched by a user.

Reference numeral 5 denotes a GPS receiver for receiving a GPS signal sent from a GPS satellite in order to detect the latitude and longitude of the current position of a vehicle. Reference numeral 6 denotes a self navigation sensor comprising an angle sensor 6a, such as a gyroscope, for detecting the angle of rotation of the vehicle, and a distance sensor 6b for generating a pulse with every certain distance traveled.

The display device 7 is, for example, a liquid crystal panel. In the navigation system body 10, a map of the area surrounding current position of the vehicle and various pieces of guide information are displayed on the display device 7. Reference numeral 8 denotes a speaker for providing guide information to the user by a voice.

The navigation system body 10 comprises a DVD controller 11 for controlling the reading of map data from the DVD 1, a buffer memory 12 for temporarily storing map data read out from the DVD 1, an interface 13 connected to the operating sention 3, an interface 15 connected to the GPS receiver 5, and an interface 16 connected to the self navigation sensor 6.

Reference numeral 17 denotes a control section comprising a microcomputer. The control section 17 executes various processing operations, such as detecting the current position of the vehicle based on information input from the interfaces 15 and 16, controlling the DVD controller 11 to read out a predetermined piece of map data from the DVD 1 to the buffer memory 12, and searching for a guide route under a search condition that has been set using the map data read out to the buffer memory 12. The control section 17 also comprises a memory 17a for storing the positions of POIs and other pieces of data registered by the user.

Reference numeral 18 denotes a map forming section for producing a map image using the map data read out to the buffer memory 12. Reference numeral 19 denotes an operating screen/mark generating section for providing various menu screens (operating screens) according to the state of operation and for generating various marks, such as a vehicle position mark and a pointer.

Reference numeral 20 denotes a guide route storage section for storing the guide route searched for by the control section 17. Reference numeral 21 denotes a guide route drawing section for drawing the guide route. The guide route storage section 20 records all nodes of the guide route searched for by the control section 17 from the place of departure to the destination. For example, the guide route drawing section 21 draws the guide route with a color and line width that are different from those of other roads by reading out guide route information (node rows) from the guide route storage section 20, when displaying a map.

Reference numeral 22 denotes a voice outputting section for supplying a voice signal to a speaker 8 based on a signal from the control section 17.

Reference numeral 24 denotes an image synthesizing section for superimposing, for example, various marks and operating screens generated by the operating screen/mark generating section 19 and the guide route drawn by the guide route drawing section 21 upon, for example, the map image drawn by the map forming section 18 in order to display them on the display device 7.

In the navigation system having such a structure, the control section 17 detects the current position of the vehicle from the GPS signal received by the GPS receiver 5 and a signal input from the self navigation sensor 6. Then, map data of an area surrounding the current position of the vehicle is read out from the DVD 1 through the DVD controller 11 and stored in the buffer memory 12. The map forming section 18 produces the map image from the map data read out to the buffer memory 12 in accordance with the signal from the control section 7 and is displayed on the display device 7.

The control section 17 detects the current position of the vehicle from the signals input from the self navigation sensor 6 and the GPS receiver 5 as the vehicle moves in order to, in accordance with the detection result, display guide information on the display device 7 or output the guide information from the speaker 8 by a voice.

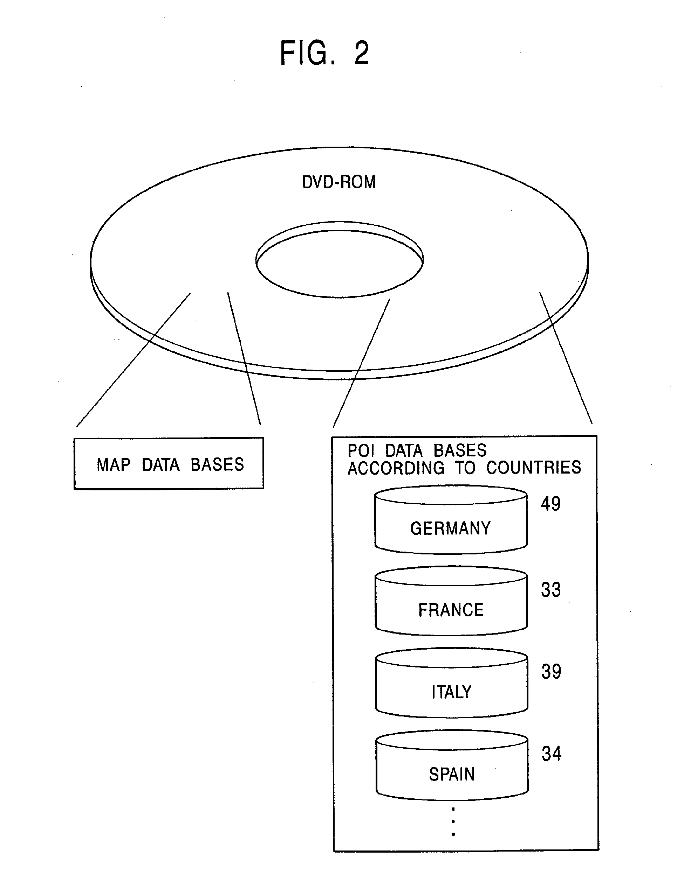

As shown in Fig. 2, the DVD 1 records POI data bases according to countries as well as map data bases of a plurality of countries. These POI data bases provided according to countries are correlated with respective country codes for international calls. For example, the POI data base of Germany is correlated with the country code "49," and the POI data base of France is correlated with the country code "33."

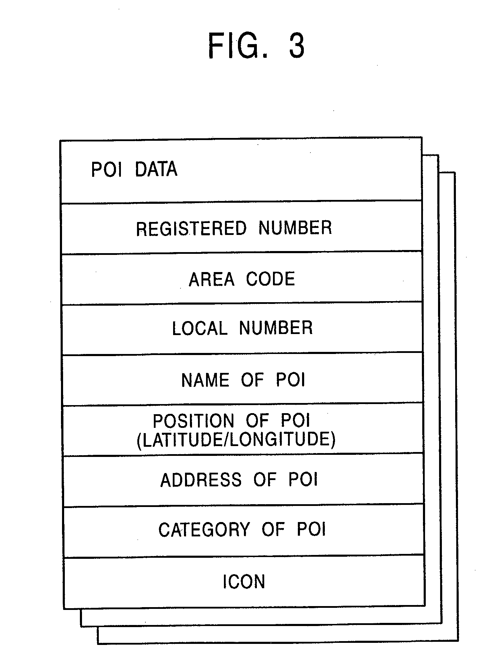

Fig. 3 is a schematic view showing the structure of a POI data base. As shown in Fig. 3, the POI data base comprises many pieces of POI data. In one piece of POI data, a registered number, the area code and local number, the name, the position (latitude/longitude), the address, and the category (gasoline station, department store, city hall, etc.) of the POI; and icon data and other types of data used when the POI is displayed on the map are recorded.

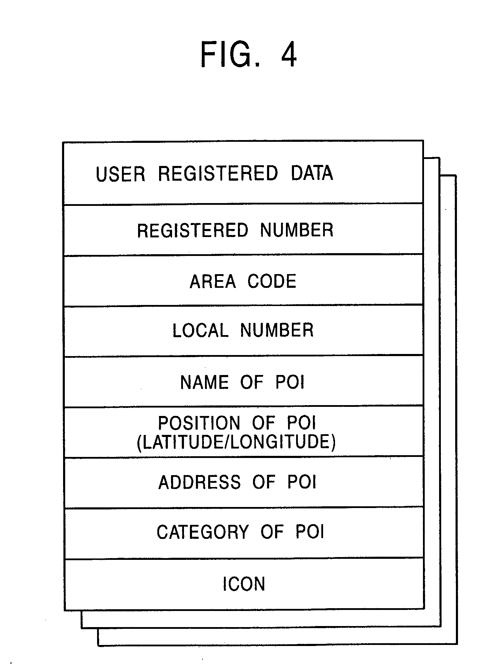

Fig. 4 is a schematic view showing the structure of a POI data base registered by a user. As shown in Fig. 4, in one piece of data registered by the user of a POI data base registered by the user, a registered number, the area code and local number, the name, the position (latitude/longitude), the address, and the category of the POI; and icon data and other types of data can be recorded. However, for the POI data base registered by the user, the user can register any number for the area code and the local number.

Hereunder, the principle of the method for retrieving a POI in the vehicle navigation system having the above-described structure will be described.

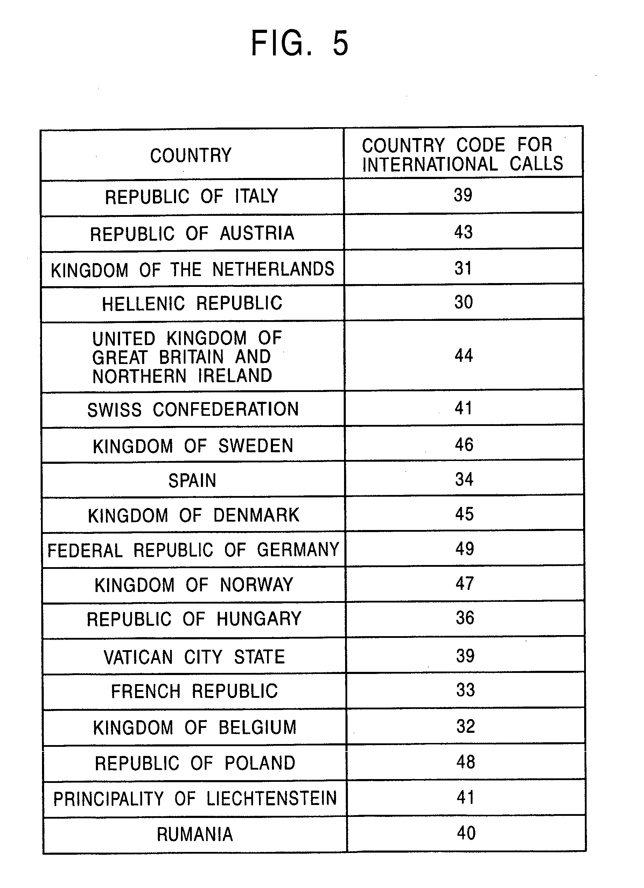

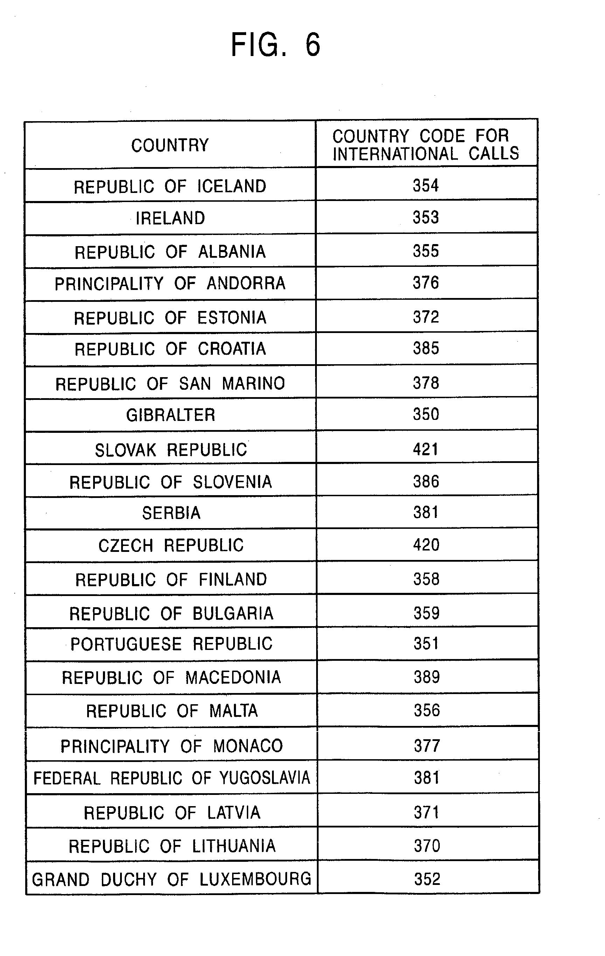

For example, in the case of Europe, as shown in Figs. 5 and 6, there are countries, like the United Kingdom, Italy, Austria, Germany, and France, having two digit country codes for international calls, and countries, like Ireland, Bulgaria, Luxembourg, Malta, and Portugal, having three digit country codes for international calls.

When the countries shown in Figs. 5 and 6 are to be searched, the first two digits of the three digit country codes are 35, 37, 38, or 42. For two digit country codes, numbers in the 30s and 40s other than 35, 37, 38, and 42 are used.

Therefore, if the first two input digits correspond to the two digits of any one of the country codes shown in Fig. 5, the POI data base of the corresponding country code is retrieved.

If the first two input digits are 35, 37, 38, or 42, it cannot be determined to what country code the input digits correspond until the third digit is input.

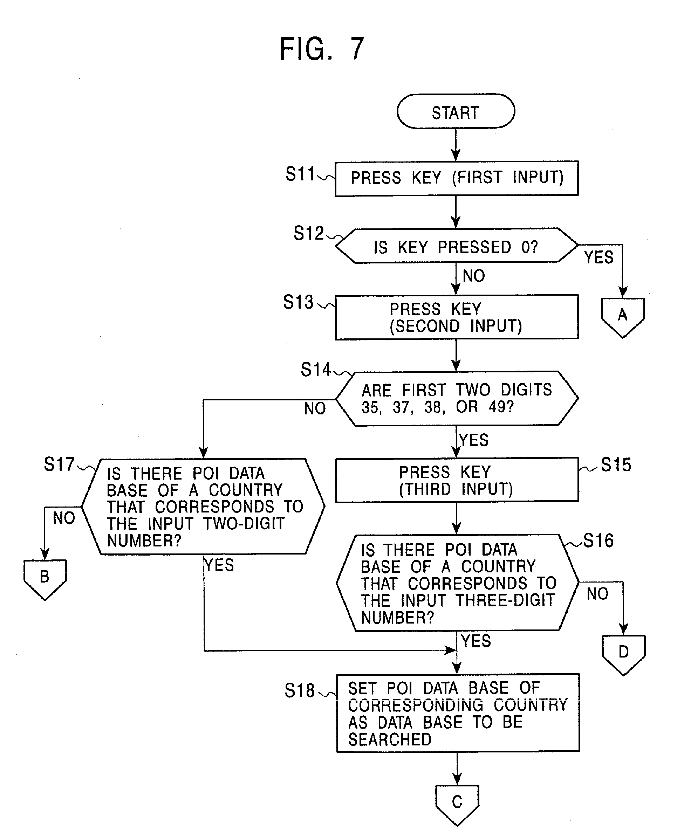

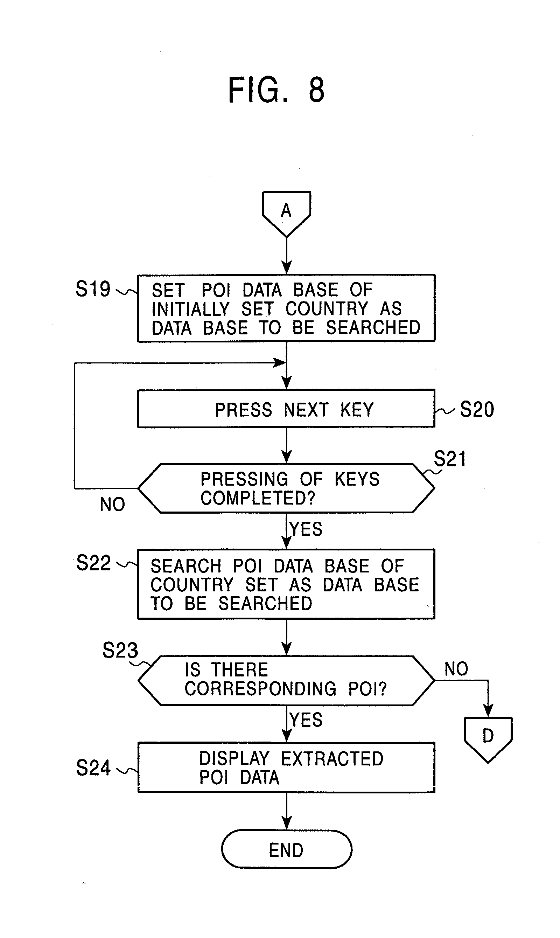

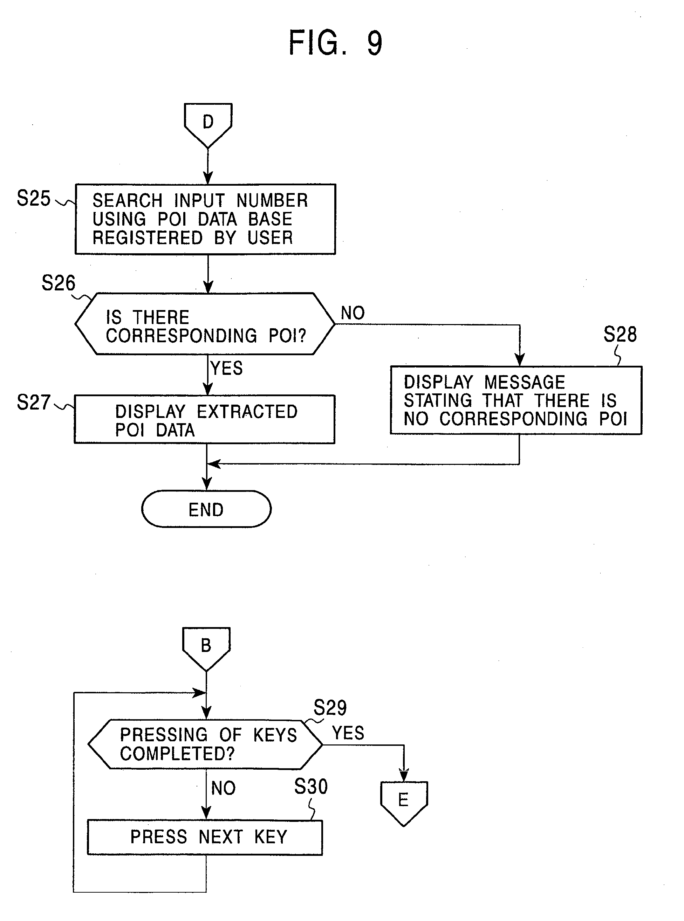

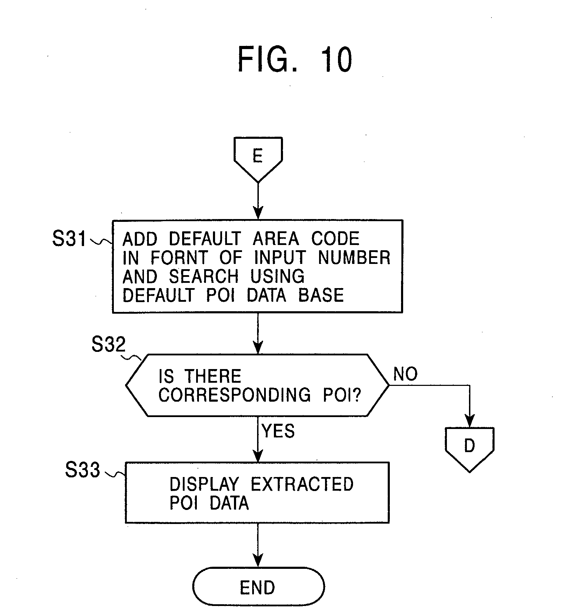

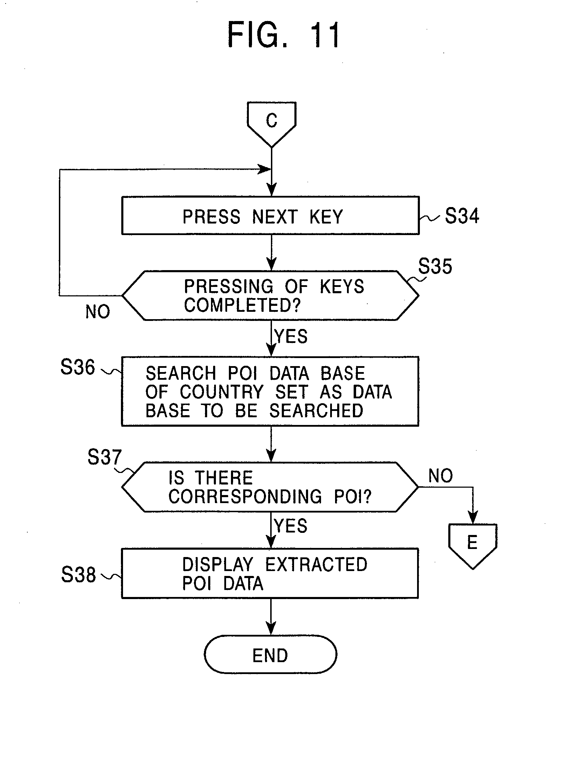

Figs. 7 to 11 are flow charts illustrating the method for retrieving a POI by a telephone number in an embodiment of the present invention. In the following example, pieces of information, such as the country, address, and telephone number of the user, are previously recorded as user information in the vehicle navigation system, and, by this information, an initially set country and an initially set area code are determined. For example, if the user lives in Hamburg, Germany, the initially set country is Germany having a country code of 49, and the initially set area code is 040.

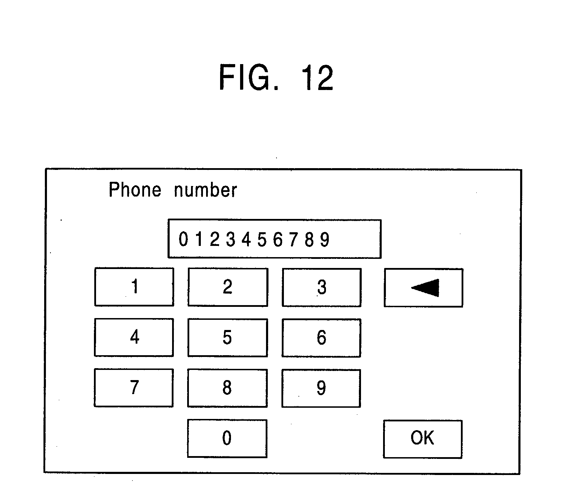

First, when the numerical keypad of the operating section 3 is pressed in Step 11, a display like that shown in Fig. 12 is provided on the display device 7, and the mode becomes a digit input mode. Then, the operation proceeds to Step S12 in order for the control section 17 to determine whether or not the first input digit is "0." If the first input digit is "0," the operation proceeds to Step S19 in order to set the POI data base of the initially set country as the data base to be searched. In other words, when the first pressed digit is "0," a processing operation that assumes that an area code in Germany is input is carried out.

Thereafter, the operation enters a loop of Steps S20 and S21 in order to continue inputting digits. When the predetermined digits have been input, the operation proceeds to Step S22, and the sequence of the input digits is used as a retrieval key to retrieve the POI corresponding to the input digits in the POI data base that is searched. Then, in Step S23, a determination is made as to whether or not the corresponding POI is provided. If it is determined that the corresponding POI is not provided, the operation proceeds to Step S25, whereas, if it is determined that the corresponding POI is provided, the operation proceeds to Step S24. The retrieved PQI data is displayed on the display device 7 in Step S24.

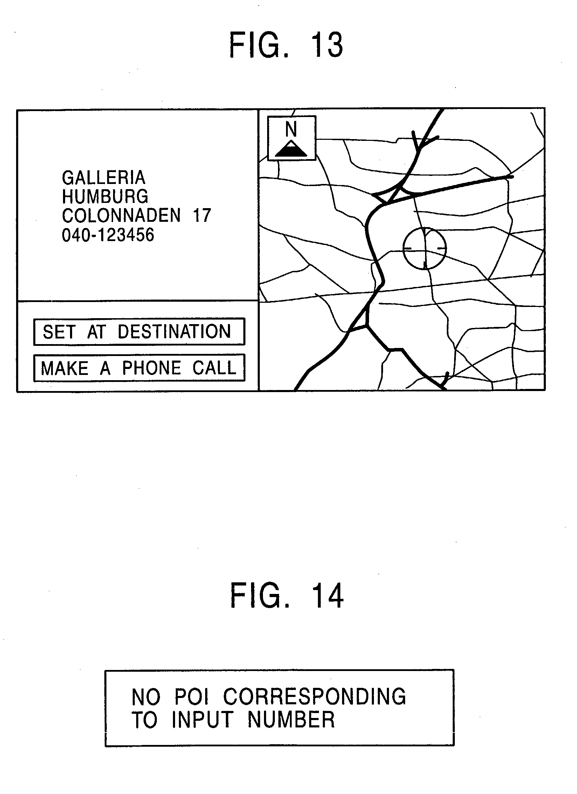

Fig. 13 shows an example of a POI information display that is produced on the display device after retrieving the POI. In the example shown in Fig. 13, the map of the area surrounding the retrieved POI is displayed at the right side of the screen, whereas pieces of information, such as the address and telephone number of the POI, are displayed on the left side of the screen. In this state, when "set as destination" is selected, the retrieved POI is set as a destination in order to search for a guide route from the current position of the vehicle to the destination, so that the user is provided with guide information when necessary to allow him to move the vehicle in a recommended route. When, "make a phone call" is selected, the user phones the retrieved POI using a telephone (not shown) connected to the navigation system.

On the other hand, when the operation proceeds from Steps S23 to S25, the POI corresponding to the input digits is retrieved using a POI data base registered by the user, which is recorded in the memory 17a. Then, in Step S26, a determination is made as to whether or not the corresponding POI is provided. If it is determined that the corresponding POI is provided, the operation proceeds to Step S27 to display information of the POI on the display device 7 (see the example of the screen display in Fig. 13).

On the other hand, if it is determined that the corresponding POI is not provided in Step S26, the operation proceeds to Step S28 to display on the display device 7 a message stating that the corresponding POI is not provided. Fig. 14 shows an example of a screen display when the corresponding POI is not provided.

If a determination is made that the first input digit is a digit other than "0" in Step S12, the operation proceeds to Step S13 to wait for an input of the second digit. When the second digit is input, the operation proceeds to Step S14. In Step S14, a determination is made as to whether or not there is a POI data base having a country code that corresponds to the two input digits.

More specifically, if the two input digits are 35, 37, 38, or 49, it is not possible to determine whether or not there is a POI data base having a country code that corresponds to the two input digits, and the operation proceeds to Step S15. If the two input digits are not 35, 37, 38, or 49, the operation proceeds from Step S14 to Step S17 in order to make a determination as to whether or not the POI data base of the country that corresponds to the two input digits is recorded on the DVD 1. If it is recorded, the operation proceeds to Step S18, whereas, if it is not recorded, the operation proceeds to Step S29.

When it is not possible to determine whether or not a POI data base of a corresponding country code is provided by only two digits, that is, when the operation proceeds from Step S14 to Step S15, an input of the third digit is waited for. When the third digit is input in Step S15, the operation proceeds to Step S16 in order to determine whether or not the POI data base of the country code corresponding to the three input digits is recorded on the DVD 1. If it is recorded, the operation proceeds to Step S18, whereas, if it is not recorded, the operation proceeds to Step S29.

In Step S18, the POI data base of the country code corresponding to the two or three input digits is set as the data base to be searched.

Then, the operation enters a loop of Steps S34 and S35 to continue inputting digits. When a predetermined number of digits has been input, the operation proceeds to Step S36. In Step S36, the POI data base to be searched is used and the sequence of the input digits (excluding the digits used to determine the POI data base to be searched) is used as a retrieval key to retrieve a POI in the POI data base that is searched. Thereafter, in Step S37, a determination is made as to whether or not the POI corresponding to the retrieval key is provided in the POI data base. If the POI corresponding to the retrieval key is not provided, the operation proceeds to Step S31, whereas, if it is provided, the operation proceeds to Step S38. In Step S38, information of the retrieved POI is displayed on the display device 7 (see the example of the screen display shown in Fig. 13).

When making an international call, it may be necessary to add the area code "0" after the country code depending on the country. For example, in the case of Italy, it is necessary to add "0" as a prefix between the country code and the area code. In the navigation system of the embodiment, when an international call is made to such a country, the prefix is automatically added.

When the operation proceeds to Step S31 from Step S37, POI retrieval which supposes a local number is executed. More specifically, in Step S31, the initially set area code (040 in this example) is added in front of the input digit sequence and this is used as a retrieval key. The POI corresponding to the retrieval key is retrieved from the POI data base of the initially set country (Germany).

In Step S32, a determination is made as to whether or not the POI corresponding to the retrieval key is provided in the POI data base. If it is provided, the operation proceeds to Step S33, whereas, if it is not provided, the operation proceeds to Step S35. In Step S33, information of the retrieved POI is displayed on the display device 7 (see the example of the screen display shown in Fig. 13).

When the operation proceeds to Step S25 from Step S32, the input digit sequence is used as a retrieval key to retrieve the POI data base registered by the user. In Step S26, a determination is made as to whether or not the corresponding POI is provided. If the corresponding POI is provided, the operation proceeds to Step S27, and information of the retrieved POI is displayed on the display device 7 (see the example of the screen display shown in Fig. 13). On the other hand, in Step S26, if the corresponding POI is not provided, the operation proceeds to Step S28 in order to display on the display device 7 a message indicating that the corresponding POI is not provided (see the example of the screen display shown in Fig. 14).

If it is determined that the POI data base of the country code that corresponds to the input digits is not provided in either Step S16 or Step S17, the operation enters a loop of Steps S29 and S30. Then, input up to the last digit is waited for, after which the operation proceeds to Step S31. In Step S31, the initially set area code (040 in this example) is added in front of the input digit sequence and this is used as a retrieval key. The POI corresponding to the retrieval key is retrieved from the POI data base of the initially set country (Germany).

In Step S32, a determination is made as to whether or not the POI corresponding to the retrieval key is provided in the POI data base that is searched. If the corresponding POI is provided in the data base, the operation proceeds to Step S33, whereas, if it is not provided, the operation proceeds to Step S25. In Step S33, information of the retrieved POI is displayed on the display device 7 (see the example of the screen display shown in Fig. 13).

When the operation proceeds to Step S25 from Step S32, the input digit sequence is used as a retrieval key to retrieve a POI data base registered by the user. A determination is made as to whether or not the corresponding POI is provided in Step S26. If the corresponding POI is provided, the operation proceeds to Step S27, and information of the retrieved POI is displayed on the display device 7 (see the example of the screen display shown in Fig. 13). On the other hand, if the corresponding POI is not provided, the operation proceeds to Step S28 in order to display on the display device 7 a message indicating that the corresponding POI is not provided (see the example of the screen display shown in Fig. 14).

Accordingly, in the embodiment, when the user starts inputting data from the country code, the corresponding POI is retrieved from the country POI data base corresponding to the country code. On the other hand, when the user starts inputting data from the area code or the local number, a desired POI is retrieved from a POI data base of an initially set country. When the corresponding POI is not provided in the POI data base that is searched, the desired POI is retrieved from a POI data base registered by the user.

In the embodiment, unlike related methods, it is not necessary to display a menu screen and specify the country to be searched, so that a desired POI is retrieved from a POI data base of a predetermined country by merely inputting a country code and a telephone number. By this, usability of the retrieving device in retrieving a POI by a telephone number is greatly increased.

Although, in the embodiment, the method for retrieving POIs of European countries by the telephone numbers thereof is described, the present invention is not limited thereto. For example, the method may be used for retrieving POIs of Asian countries by telephone numbers thereof. Here, when a country code comprises three digits, the first two digits are 96, 97, 85, or 88. On the other hand, when a country code comprises two digits, digits other than 96, 97, 85, and 88 are used. Therefore, as in the embodiment, in this case also, a desired POI can be retrieved from POI data bases that are constructed according to Asian countries by merely inputting the corresponding country code and telephone number.

Although, in the embodiment, the case where a desired POI is retrieved by a telephone number is described, the present invention is not limited thereto. For example, the present invention may be applied to the case where a desired POI is retrieved from data bases constructed by adding specific ID numbers to a plurality of respective geographic points. For example, the present invention may be applied to a device for retrieving a POI corresponding to an ID number from a POI data base of a country that is searched after determining the POI data base by inputting the country code for an international call. Here, the device uses as a retrieval key a digit other than the digits of the country code in order to retrieve the corresponding POI.

Although, in the embodiment, the case where the present invention is applied to a vehicle navigation system is described, the present invention is not limited in its application to a vehicle navigation system. The present invention may also be applied to a method for retrieving a POI by a telephone number by reading a program into a general-purpose computer and executing it.

Although, in the embodiment, the POI data bases that are provided according to countries are recorded on the DVD 1, these POI data bases may be recorded, for example, at an external information center that is connected through, for example, a vehicle-mounted phone.

Although, in the embodiment, the operations that are carried out when the mode of operation changes from normal operation mode to a number input mode as a result of pressing the numeric keypad of the operating section is described, a POI data base of a country to be searched may be selected from a menu screen having a hierarchical structure.

As described above, according to the present invention, since a plurality of POI data bases that are provided according to countries are correlated with respective country codes for international calls, it is not necessary to read out a menu screen and specify a country to be searched, so that a desired POI can be retrieved by merely inputting the country code and telephone number.

## Claims

1. A point-of-interest retrieving device for retrieving a desired point of interest from a plurality of point-of-interest data bases that are provided according to countries, the device comprising:
storing means for storing the plurality of point-of-interest data bases by correlating them with respective country codes for international calls; and
controlling means for determining a point-of-interest data base to be searched from the plurality of point-of-interest data bases in accordance with a digit of a number input through inputting means, and for, by using as a retrieval key a sequence of digits following the digit of the number used to determine the point-of-interest data base to be searched, retrieving the corresponding point of interest from the point-of-interest data base.

2. A point-of-interest retrieving device according to Claim 1, wherein the controlling means executes a first determining operation for determining whether or not a point-of-interest data base of a country having a country code that corresponds to the first two digits of the number input through the inputting means is provided in the storing means; wherein, if the controlling means determines that the point-of-interest data base is provided in the first determining operation, the controlling means determines the point-of-interest data base as the point-of-interest data base to be searched; wherein, if the controlling means is not capable of determining that the point-of-interest data base is provided in the first determining operation, the controlling means executes a second determining operation for determining whether or not a point-of-interest data base of a country having a country code that corresponds to the first three digits of the number input through the inputting means is provided; and wherein, if the controlling means determines that the point-of-interest data base is provided in the second determining operation, the controlling means determines the point-of-interest data base as the point-of-interest data base to be searched in order to, by using as the retrieval key a sequence of digits of the number input through the inputting means following the digits used to determine the point-of-interest data base to be searched, retrieving the corresponding point of interest from the point-of-interest data base.

3. A point-of-interest retrieving device according to Claim 1 or 2, wherein, if the first two digits of the number input through the inputting means form a particular two-digit number in the first determining operation, the controlling means is not capable of determining whether or not the point-of-interest data base is provided; wherein, if the first two digits form another particular two-digit number, the controlling means determines that the point-of-interest data base is provided; and wherein, if the first two digits form a two-digit number other than the particular two-digit numbers, the controlling means determines that the point-of-interest data base is not provided.

4. A point-of-interest retrieving device according to Claim 1, 2 or 3, wherein, if the first digit of the number input through the inputting means is 0, the controlling means determines a point-of-interest data base of an initially set country as the point-of-interest data base to be searched in order to, by using the number input through the inputting means as the retrieval key, retrieving the corresponding point of interest.

5. A point-of-interest retrieving device according to Claim 2, wherein the first determining operation is executed when the first two digits are input, and the second determining operation is executed when the third digit is input.

6. A point-of-interest retrieving device according to any one of Claims 2 to 5, wherein, if the controlling means determines that the point-of-interest data base of the country having the corresponding country code is not provided in the first determining operation or the second determining operation, the controlling means uses the number input through the inputting means as the retrieval key in order to retrieving the corresponding point of interest from a point-of-interest data base registered by a user.

7. A point-of-interest retrieving device according to any one of Claims 2 to 5, wherein, if the controlling means determines that the point-of-interest data base of the country having the corresponding country code is not provided in either the first determining operation or the second determining operation, the controlling means uses as the retrieval key a number consisting of an initially set area code added to the number input through the inputting means in order to retrieve the corresponding point-of-interest from the point-of-interest data base of the initially set country.

8. A method for retrieving a desired point of interest from a plurality of data bases that are provided according to countries, the method comprising the steps of:
(1) correlating the plurality of point-of-interest data bases with respective country codes for international calls;
(2) executing a first determining operation for determining whether or not a point-of-interest data base of a country having a country code that corresponds to the first two digits of an input number is provided;
(3) if it is determined that the point-of-interest data base is provided in the first determining operation, determining the point-of-interest data base as a point-of-interest data base to be searched;
(4) if it cannot be determined that the point-of-interest data base is provided in the first determining operation, executing a second determining operation for determining whether or not a point-of-interest data base of a country having a country code that corresponds to the first three digits of the input number is provided;
(5) if it is determined that the point-of-interest data base is provided in the second determining operation, determining the point-of-interest data base as the point-of-interest data base to be searched; and
(6) by using as a retrieval key a sequence of digits following the digits used to determine the point-of-interest data base to be searched, retrieving the corresponding point of interest from the point-of-interest data base that is searched.
